Europäisches Patentamt

European Patent Office

Office européen des brevets

(11) Publication number: 0 493 896 A2

# EUROPEAN PATENT APPLICATION

(21) Application number: 91311342.9

(22) Date of filing: 05.12.91

(51) Int. Cl.⁵: H04Q 3/00

(30) Priority: 31.12.90 US 636049
04.02.91 US 650155

(43) Date of publication of application:
08.07.92 Bulletin 92/28

(84) Designated Contracting States:
AT BE DE ES FR GB IT NL SE

(71) Applicant: AMERICAN TELEPHONE AND
TELEGRAPH COMPANY
550 Madison Avenue
New York, NY 10022(US)

(72) Inventor: Reading, Craig Alan
33 Endicott Road
Hamilton Square, New Jersey 08690(US)
Inventor: Sprague, David Lee
11 Sotirios Court
Haverhill, Massachusetts 01832(US)
Inventor: Wilson, Lance Wayne
2 Concord Road
Marlboro, New Jersey 07746(US)

(74) Representative: Watts, Christopher Malcolm
Kelway, Dr. et al
AT&T (UK) LTD. AT&T Intellectual Property
Division 5 Mornington Road
Woodford Green Essex IG8 OTU(GB)

(54) Method and circuitry for routing a call.

(57) A network routing method and structural embodiment wherein a call is routed from a calling station (110) to a desired called destination (115) among a plurality of destinations reachable by a number dialed from the calling station, and wherein that routing illustratively is through a digital link splicer circuit (135) selected on the basis of the dialed number, and the desired destination is selected by a data base system (140,145) that retrieves a number of the desired destination based solely on the telephone number of the calling station.

FIG. 1

## Technical Field

This invention relates to telephone network services and particularly to a service and equipment that routes a telephone call from a calling station to a desired nearby destination station through an intermediate node. The call routing is effected under control of database look-up in response to a receipt of the calling station billing telephone, number which is commonly the directory number.

## Background of the Invention

Telephone network switching systems commonly use databases to determine geographically significant destination telephone numbers in response to a calling station dialing a special services number (i.e., 800, 900 and similar services). Basically, a database look-up is performed by the local or long distance switching system based on the dialed number and a directory number is retrieved in response thereto for completing the call to a desired destination. The benefits of these systems are legion. Such services as cable television pay-per-view and routing of a customer to an airline reservation office use some form of this service.

One such service is described in Bernard N. Riskin U.S. Patent No. 4,757,267 issued July 12, 1988 (hereinafter "Riskin"). Riskin describes a telephone system that connects a calling station to a nearby destination telephone that can supply desired goods or services. This service uses special customer/dealer service centers which use at least part of both the dialed number and the telephone number of the calling station (identified by Automatic Number Identification or "ANI") to perform a vertical-horizontal coordinates database search for determining the geographic location and telephone number of a supplier of the required goods or services. The telephone number of the calling station is obtained either from the telephone network by ANI or interactively with automatic or human prompts. The dialed number is also obtained either from the telephone network or through interactive prompts.

Such database methods delay call processing due to the amount of processing time that it takes to perform complex searches and, in some cases, complex geographic comparisons. A database and database manager that performs complex searches are equally complex and have a correspondingly high cost. In addition, interactive communication with a customer slows down the process of completing a call even further, with any needed human intervention causing very long delays. A problem in the art, therefore, is that current network routing services lengthen call processing, are costly, complex and in some cases require human interaction.

## Summary of the Invention

This problem is solved and a technical advance is achieved in accordance with the principles of the invention in an exemplary network routing method and structural embodiment in which a call is routed rapidly from a calling station to a desired called destination and wherein that routing illustratively is through an intermediate node comprising a digital link splicer circuit accessing a database system that retrieves a number of the desired destination based solely on the telephone number of the calling station. A technical advance is that the number retrieval requires no portion of the number dialed by the caller.

This service is suitable, for example, to provide a chain, such as a pizza chain, with a single nationwide telephone number which can be called for ordering pizza. To order a pizza from the pizza chain, the customer dials the nationally advertised number and is routed to a store in the chain nearby the caller. In this manner, the customer does not have to know which store serves the customer's area, and the chain can save on advertising costs. The proximity of the store to the caller is a convenience to both and facilitates order fulfillment time guarantees.

Illustratively, a call is routed from a calling station to a local exchange carrier which then extends the call to an intermediate node. The latter comprises a new digital link splicer circuit and a database system. The local exchange carrier transmits the calling station telephone number (ANI) to the intermediate node. The splicer circuit at the intermediate node places the originating end of the call on temporary hold and translates the ANI into computer-readable form. The translated ANI is then sent to a database manager, which uses it as a key to retrieve a desired telephone number, for example, the number of a store designated to serve the calling station. The retrieved number is returned to the digital link splicer circuit for placing and controlling the further establishment of a telephone call to the designated called station. The digital link splicer circuit creates a single call by splicing the originating and terminating ends together and removes the temporary hold on the originating end. All further call establishment is handled by the local exchange carrier network.

In view of the foregoing, a feature of this invention is a method of routing a telephone call from a calling station connected to a communication network to a desired one of a plurality of destinations of a customer of the network comprising routing the call from the network to an intermediate node and retrieving a telephone number of the desired destination, characterized in that the retrieving comprises receiving the calling station's telephone number from the network and deriving the number of the destination based solely on the received calling station telephone number.

In an exemplary embodiment, an intermediate node routes a call from a calling station to a nearby destination via a digital link splicer circuit which receives a calling station number from the telephone network and derives a number from a database for controlling further routing of the call from the calling station through the circuit to the desired destination. The circuit converts the calling number to computer-usable form, and communicates the converted number to a database. The circuit converts the derived number delivered by the database and uses the derived number to place a telephone call to the nearby destination.

In a further embodiment, a method according to the invention is used in a system for routing a telephone call from a calling station connected to a communication switching network to a desired destination. The method comprises the steps of placing a first call from the calling station and routing the first call, based on a dialed number, through the network to an intermediate node. The calling station telephone number is received from the network and used by the system to derive a destination telephone number. A second call is initiated by the node to the desired destination, and the two calls are connected together, so that the caller can hear call progress tones such as audible ringing and busy tones.

In a further embodiment, a method according to the invention is used in a system for routing a telephone call from a calling station connected to a first local office to a desired destination connected to a second local office. The method comprises the steps of placing a first call from the calling station and routing the first call from the first office to an access tandem switch. The tandem switch routes the first call to a digital link splicer circuit at an intermediate node, which receives the calling station number from the network. The circuit communicates the calling station telephone number to a database system at the intermediate node, which retrieves a telephone number for the desired destination based solely on the calling station telephone number. The database communicates the derived number to the circuit and the circuit initiates a second call based on the derived number and connects the two calls. The tandem switch receives the call initiation and routes the second call through the second network to the desired destination.

## Brief Description of the Drawing

FIG. 1 is a block diagram illustrating the principles of this invention in a telephone network;

FIG. 2 is an expanded block diagram illustrating the digital link splicer of FIG. 1;

FIG. 3 is a block diagram of an illustrative database manager;

FIG. 4 is a signaling chart for use in the inventive process and apparatus;

FIG. 5 is a block diagram illustrating an alternate embodiment of this invention in a telephone network;

FIG. 6 is a signaling chart for use in alternate embodiment of FIG. 5, and

FIG. 7 is a further embodiment of this invention in a long-distance telephone network.

## Detailed Description

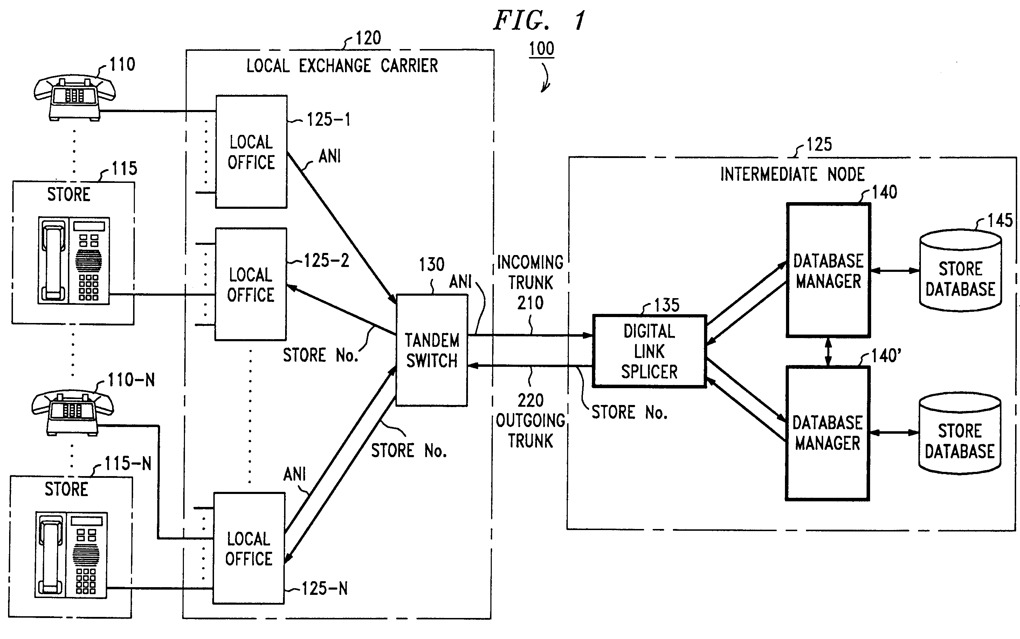

Referring to FIG. 1, a telephone call is described from a telephone station 110 through a local exchange carrier network 120 and an intermediate node 125 to a merchant store 115. In this example, the user of telephone 110 is calling a local store franchised or designated to serve requests for certain products or items from the calling telephone 110. According to this exemplary method, the user dials the telephone number 950-WXXX, and is automatically and rapidly connected to store 115 nearby to telephone 110. The exemplary method according to this invention is based on "950" feature group D, as described in Bellcore TR-TSY-000530, especially Table 1. "W" is either 0 or 1 currently, but is planned to be expanded to any number from 0-9. "X" may be any number from 0-9, and the four digits together represent the code number for a particular franchise chain. A national chain may advantageously use one seven digit number nationwide, whereby a telephone in any region of the country may be connected to a store nearby the location of the calling telephone, thus promoting efficiency in advertising and efficiency in distribution.

When the user of telephone 110 dials the 950-WXXX, the local office 125-1 in the exchange carrier network 120 recognizes the 950 feature code and routes the call to an access tandem switch 130. Tandem switch 130 routes the call to a digital link splicer circuit 135 (DLS) located in an intermediate node 125 corresponding to the WXXX digits, and sends the billing telephone number of telephone 110.

DLS 135 receives the call from tandem switch 130 together with the 10-digit ANI (Automatic Number Identification) of the calling telephone station 110. In this embodiment, the ANI is the billing number of calling telephone station 110, which is commonly, but not necessarily, the same as the directory number of calling telephone station 110. It is to be understood that this invention is not limited to the ANI being the billing telephone number. DLS 135 places the call on temporary hold, translates the ANI from MF to binary form and sends the translated ANI to a computer database manager 140. The latter is connected to DLS 135 in a primary/backup configuration, and the DLS 135 can switch from its primary database manager 140 to its backup database manager 140' automatically if DLS 135 does not receive a response from its primary within a reasonable time period.

Database manager 140 receives the translated ANI from DLS 135 and performs a database search in a store database 145 using only the ANI as a key. The search is thus rapidly performed and a telephone number for a store, such as store 115 located near the calling telephone, is returned. Database manager 140 returns the store telephone number to DLS 135.

When DLS 135 receives the store 115 telephone number, it seizes an outgoing trunk to tandem switch 130, translates the store telephone number to the appropriate MF or DTMF signaling, and out-pulses the store telephone number to tandem switch 130. DLS 135 also completes (i.e., splices) a communication path from the incoming trunk to the outgoing trunk thereby removing the temporary hold from the call. Tandem switch 130 next completes the call through the local exchange carrier network 120 by extending the call connection to store 115 via local office 125-2. DLS 135 detects changes in answer supervision (i.e., on-hook, off-hook) representing either call completion or abandonment and sends this information to database manager 140. The latter then generates a record of the call for billing-related purposes and for statistics, such as number of abandoned calls, average time of taking orders, busy periods, etc., for use by both the chain and the individual store.

The calling telephone and the store telephone may be connected to the same local office 125-N. Local office 125-N routes the call from tandem office 130 to DLS 135 at intermediate node 125. DLS 135 causes the database manager 140 to perform a look-up in store database 145. The database returns the telephone number of store 115-N, and the call is routed to local office 125-N, which extends the call to the store.

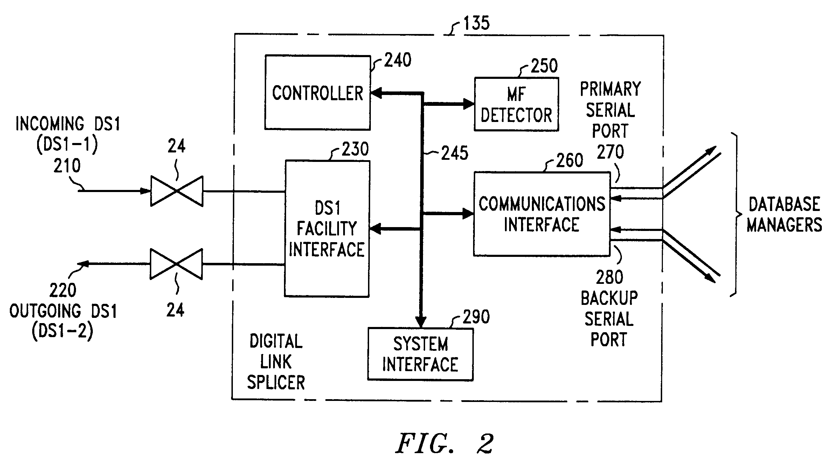

Turning to FIG. 2, DLS 135 is connected to tandem switch 130 (FIG. 1) by 2 DS1 1.544 megabit per second signal streams, comprising 24 incoming trunks 210 and 24 outgoing trunks 220. DS1's 210 and 220 are connected to a DS1 facility interface 230, which receives a data stream from incoming DS1 210, buffers that data in receive buffers (not shown), and notifies controller 240 via an interrupt. The incoming data is also placed on data bus 245 for use by controller 240 and MF detector 250. The flow of data over data bus 245 is controlled by controller 240.

Data arrives at DS1 interface 230 in frames, as is known in the art, with the least significant bit in every sixth and twelfth frame is used to provide signaling data. The signaling data is delivered to controller 240 so that it may take action according to the content of the signaling data bits. For example, when a seizure signal is received from the local network, controller 240 causes a "wink" signal to be sent to the tandem office in response thereto. Similarly, when controller 240 detects call progress signals, such as answer supervision, it updates a call status table kept for each trunk pair. Controller 240 comprises, in the preferred embodiment, an INTEL80960KA, which performs these functions.

An MF detector 250 receives data from data bus 245 and determines whether the data received is an MF digit. If it is, the digit is translated to ASCII, as is known in the art, and sent over data bus 245 to controller 240, which collects the digits. Once controller 240 has collected all of the AM (generally 10 digits), controller 240 sends the translated digits to communication interface 260 via data bus 245.

Communication interface 260 receives the translated digits of the ANI from controller 240, formats and sends a database inquiry from its primary serial port 270 to its primary database manager 140 (FIG. 1). If a response is not received within a reasonable time, the database inquiry is sent via back up serial port 280 to the mate database manager 140' (FIG. 1). Communication interface 260 receives the telephone number of the chain's store from database manager 140 (FIG. 1) via primary serial port 270 or backup serial port 280, and returns this number to controller 240. The latter causes DS1 interface 230 to seize an outgoing trunk in DS1 220 corresponding to the incoming trunk in DS1 210. For example, if the call came in on the 18th DS0 trunk of incoming DS1 210, then the call goes out on the 18th DS0 trunk of outgoing DS1 220. Once an outgoing trunk in DS1 220 has been seized, controller 240 translates the destination store 115 telephone number into a digitally encoded MF sequence using a lookup table, and outpulses the stored sequence for that number through DS1 interface 230 to the outgoing trunk in DS1 220. Controller 240 then causes the incoming buffered data from the trunk in DS1 210 to be moved to the outgoing buffers (not shown) for its paired trunk in DS1 220 and the incoming buffered data from the trunk in DS1 220 to be moved to the outgoing buffers of its paired trunk in DS1 210. This action removes the temporary hold and completes a communication path through DLS 135, causing the two ends of the call to be "spliced" together.

As in any telephone office equipment, DLS 135 includes system status and alarm panel and scan points block 290, a single circuit pack in the preferred embodiment as is known in the art. This pack 290 is updated by controller 240, and provides visible and audible alarms in the telephone switching office associated with DLS 135.

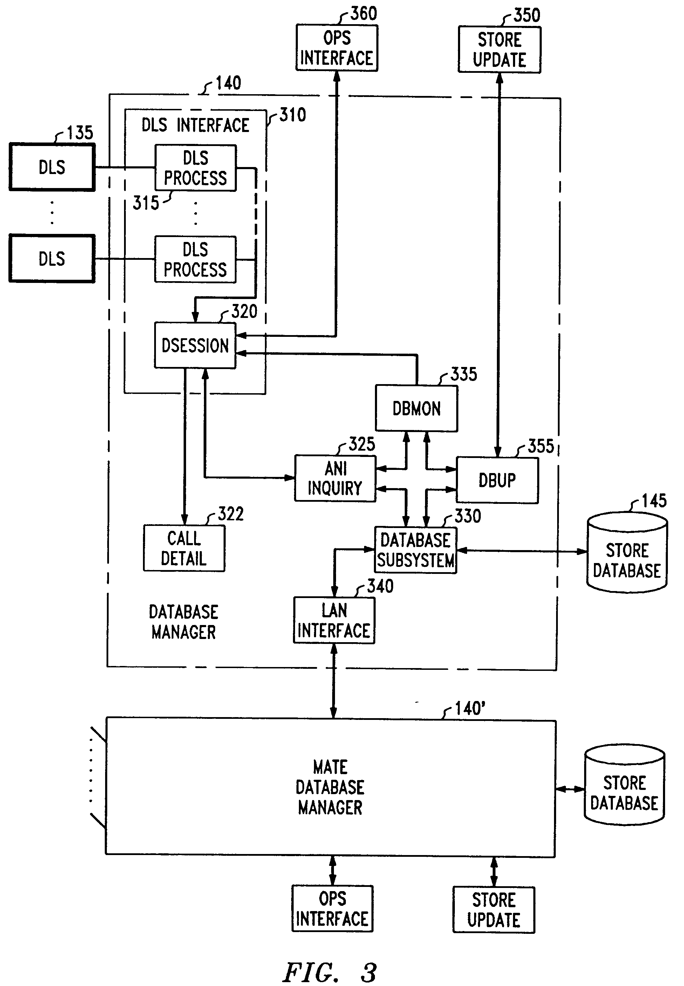

FIG. 3 is a block diagram illustrating the basic functionality of database manager 140 and store database 145 as shown in FIG. 1. The database manager hardware comprises an AT&T 6386 Work Group System with 16 megabytes (Mb) of RAM, a 300 Mb and an 80 or 135 Mb fixed disk drives for the operating system and the database, respectively, a 125 Mb QIC cartridge tape drive, a local area network interface and up to 34 serial ports. The operating system for this preferred embodiment is UNIX® System V Release 3. The database subsystem software for the preferred embodiment is ORACLE® Relational Database Management System Version 6.0 (Oracle is a registered trademark of the Oracle Corporation). The local area network subsystem used in database manager 140 is AT&T StarGROUP™ 10. Each database manager system 140 is connected to up to 14 DLS via individual 9600 baud RS-232 ports.

When DLS 135 sends an ANI inquiry to database manager 140, the inquiry is received by a DLS interface 310. For each port in DLS interface 310, there is one DLS process 315. DLS process 315 translates the ANI inquiry into an internal data structure for serving that DLS port or other DLS ports for the same customer (including the ANI and an identification number of DLS 135) and sends the ANI inquiry request to a dsession process 320. DLS process 315 also receives responses from the ANI inquiry subsystem, and sends the responses to DLS 135.

DLS process 315 exchanges messages for communication with other processes through dsession process 320. In this preferred embodiment, there is one dsession process 320 per DLS interface. Dsession process 320 forwards ANI inquiry message from the DLS process 315 to an ANI inquiry subsystem 325.

Additionally, DLS process 315 creates a call record for each call and receives call progress messages from DLS 135. When a call is complete, DLS process 315 sends call records through dsession 320 to Call Detail subsystem 322, which generates billing-related reports and other data. Call Detail subsystem 322 may, for example, keep track of whether the call was answered (a customer abandonment without call completion generally is assumed to be busy phones in the store), how long the transaction took, and keep detailed records for the number of calls that the store handles. Each franchisee may thus be billed by the franchisor based on the traffic that the store handles.

ANI inquiry subsystem 325 receives ANI inquiry request messages from dsession 320 and formats and sends the inquiry to database subsystem 330. The inquiry includes the ANI and the identification number of the DLS. ANI inquiry subsystem 325 receives the response back from database subsystem 330 and forwards the response to dsession process 320. The ANI inquiry subsystem 325 also cancels ANI inquiry requests if database subsystem 330 does not respond within a reasonable period of time, and reports database failures to dsession 320 and to a database monitor 335.

Database subsystem 330, which comprises the above-mentioned ORACLE system, receives ANI inquiries from ANI inquiry subsystem 325 and performs a database search using the ANI to derive a telephone number of a store, such as 115, assigned to serve the ANI, and returns the number to ANI inquiry subsystem 325. Each such store assignment is provided by the chain. Accordingly, the composition data in the database system is defined or controlled by that chain.

According to the preferred method of this invention, the data search comprises a table look-up. To this end, database subsystem 330 maintains a primary call routing table comprising a primary key consisting of a 10-digit number and a store ID number. If the table look-up in the primary call table did not find the 10-digit ANI, then database subsystem 330 uses a default call routing table comprising the 6-digit NPA/NNX of the ANI as a key and a store ID number. A default store ID number is also maintained based on the DLS ID for calls that did not provide even the NPA/NNX of the ANI. A second table look-up is performed using the store ID number as a key to derive the 10-digit called (store) telephone number. The called number is returned to ANI inquiry subsystem 325.

Database subsystem includes a connection to a local area network (LAN) interface 340 comprising the previously-mentioned AT&T StarLAN. LAN 340 connects database manager 140 with mate database manager 140'. Database manager 140 and mate database manager 140' share the ANI inquiry load by serving as the primary system for half of the DLS's in the office and the back-up for the other half. If the database manager cannot access its store database 145, database subsystem 330 sends the ANI inquiry over LAN 340 to mate database manager 140', which performs the table look-up and returns the 10-digit called number.

Database updates may come from a store, the database system itself, or from a terminal/system console. Store-initiated updates occur, for example, when the store receives a call from a calling station that is not located in the store's service area.

Illustratively, a store receiving such a call could use a programmable point-of-sale dial-up terminal 350 to provide the correct information. The number dialed by the terminal would permit access to both a modem connected to database manager 140, and its point-of-sale subsystem, in order to begin an update session 355, as is known in the art. The correct store phone number and calling telephone number is prompted for and passed along by point-of-sale terminal 350 and then verified in database system 330. After verification and conversion from store phone number to store ID, the store ID of the store that should serve the calling station telephone number is added to the primary call routing table in the store database 145.

Database subsystem 330 itself creates an update automatically when it detects that the 10-digit calling phone number is not present in the primary call routing table and the default call routing table is used. The store ID from the default call routing table is paired with the 10 digit calling number to create an entry in the primary call routing table. Updates from a dial-up terminal or terminal emulator and bulk updates are handled by update process 355 in a standard part of the ORACLE program. All updates are sent by database subsystem 330 over LAN 340 to mate database manager 140' in order to maintain the accuracy of the back-up database.

Database monitor process 335 initiates the various processes in the database manager 140 at system initialization and verifies accessibility of the local and remote databases. Database monitor 335 periodically verifies accessibility of the local and remote databases, and reports errors to dsession process 230.

Dsession process 320 also includes communication with an operations support system (OPS) interface 360. OPS interface 360 links database manager 140 with remote monitoring and administration facilities. Messages may be sent from the remote administration facility to OPS interface 360, and OPS interface 360 forwards the request to dsession process 320. Dsession 320 sends the message to the appropriate DLS process 315 or DBMON process 335. If DLS process 315 receives the message, it then formats and sends a message over the serial interface to DLS 135. In this way, the remote administrator may perform standard system maintenance from the OPS system on the DLS system.

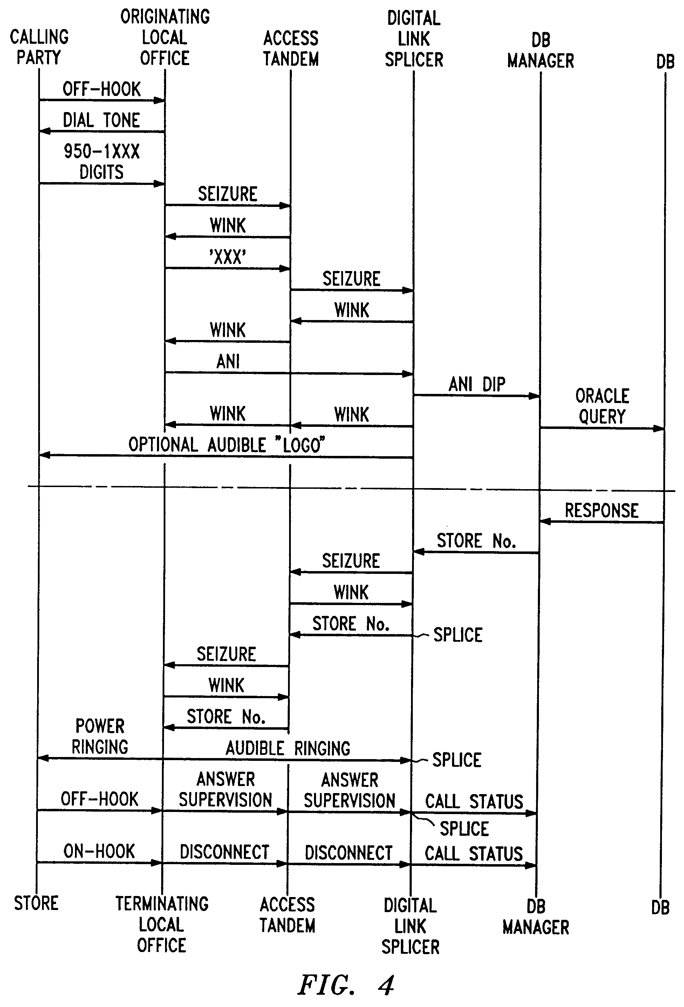

Turning now to FIG. 4, a diagram of the signal sequencing for a call connection is shown. The top portion of the diagram illustrates the calling party to the database inquiry sequence of signals, and the bottom portion (below the dashed line) illustrates the database query to the store sequence of signals. The user of the calling telephone station 110 removes the receiver from the switch hook, which causes an off-hook to be recognized at the originating local office of the LEC network 120. The local office then returns a dial tone to the calling party, and the calling party dials the 950-WXXX digits.

Office 120 recognizes the 950 special code, and seizes a trunk to the local exchange carrier's access tandem switch 130. The latter returns a wink signal back to office 120 acknowledging the trunk seizure, and office 120 out-pulses information indicating the significant digits of the 950 number (currently the last 3 digits).

Access tandem switch 130 next seizes an available trunk to DLS 135, and DLS 135 acknowledges the trunk seizure with a wink signal. Access tandem switch 130 repeats the wink on the trunk to office 120, which responds by sending two ANI information digits and the 10-digit ANI of the calling party on the trunk. The DLS receives the ANI sequence, formats and sends a ANI inquiry to the database manager 140, and sends an acknowledgement wink to office 120.

Database manager 140 formats and sends a database inquiry to the local or remote database 145. Optionally, a brief, audible "logo" or advertisement may be played to the calling party. Audible logos are described in T. M. Bauer, U.S. Patent No. 4,930,154.

The database 145 returns the called number to database manager 140, which then sends the called number to DLS 135. The DLS then seizes the outgoing trunk of DS1 220 that is a companion of the incoming trunk of DS1 210. Access tandem 130 returns a wink, acknowledging the seizure of the trunk. The DLS outpulses the called number on the trunk and splices the communication paths of the calls, that is, it begins transferring 8 bit time slots from the outgoing trunk to the incoming trunk, and vice versa, thus completing two way communication.

Access tandem switch 130 seizes a trunk according to the outpulsed called number, as is known in the art, and receives a wink from the terminating local office 120. Access tandem switch 130 then outpulses the called number to that office 120.

Office 120 in turn applies power ringing to the called party, and sends audible ringing towards the DLS, and (because of the splice) to the calling party. Office 120 detects the called party off-hook and sends an answer supervision signal back to access tandem switch 130. The latter sends the answer supervision signal to DLS 135. DLS 135 sends a message to database manager 140 reporting that the call was answered by the called party, which the database manager records along with the time the call was answered.

The connection continues until either the calling party or the called party hangs up. The on-hook state is detected by the local office, and a disconnect message is sent to access tandem 130, which forwards the message to DLS 135. The DLS sends a message to the database manager reporting the end of the call, and the database manager records the ending time. The connection is torn down according to standard carrier practices.

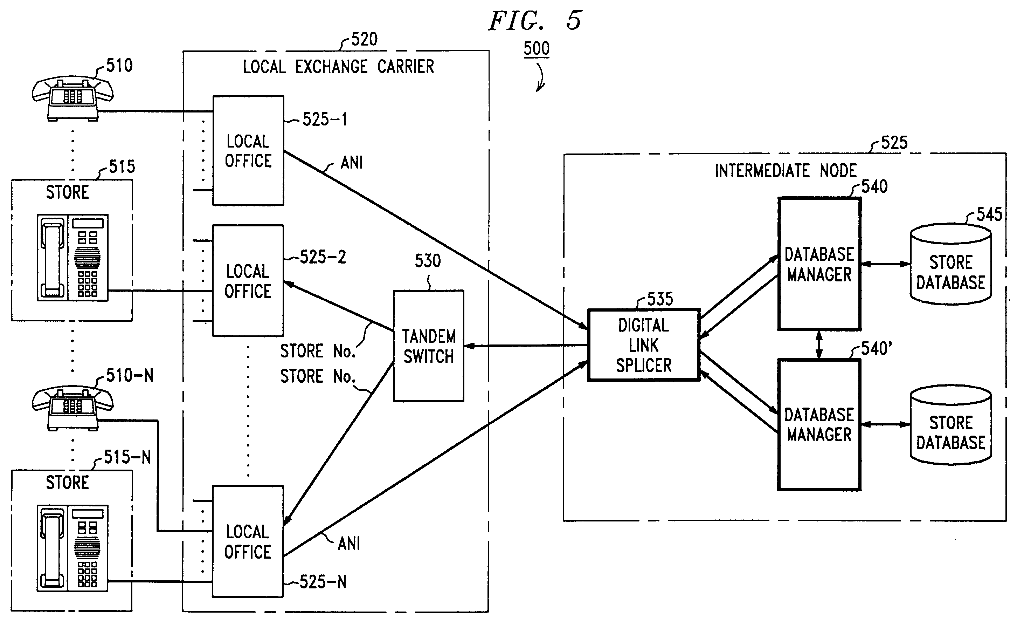

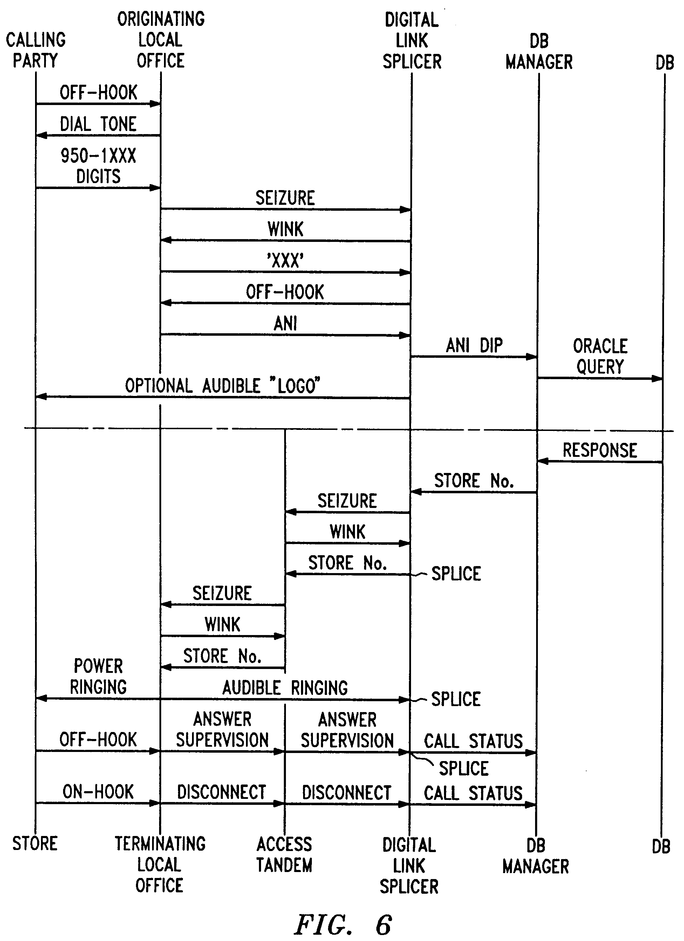

FIGS. 5 and 6 show an alternative exemplary method according to this invention. The alternative method is based on "950" feature group B. "950" on B is described in ANSI T1.109-1990. Referring to FIG. 5, a telephone call is described from a telephone station 510 through a local exchange carrier network 520 to an intermediate node 525. Intermediate node 525 then completes the call through local exchange carrier network 520 to a merchant store 515. In this alternative embodiment, intermidate node 525 directly connects to the local officer rather than through the access tandem used in the previous embodiment.

The user of telephone 510 dials 950-WXXX, the local office 525-1 and the exchange carrier network 520 recognizes the 950 feature code. Local office 525-1 translates the WXXX code and in response routes the call to an intermediate node 525.

Local office 525-1 forwards the ANI to the intermediate node. A digital link splicer circuit 535 receives the call from local office 525 together with a 7-digit ANI of the calling telephone station 510. DLS 525 places the call on temporary hold, translates the ANI from MF to binary form and sends the translated ANI to a computer database manager 540. Database manager 540 is, as in the previous embodiment, connected to DLS 535 in a primary/backup configuration. Database manager 540 receives the translated ANI from DLS 135 and performs a database lookup in a store database 545 using only the ANI as a key. Database manager 540 returns the stored telephone number to DLS 535.

When DLS 535 receives store 515 telephone number it seizes an outgoing trunk to a tandem switch 530. The DLS 535 translates the stored telephone number to the appropriate MF or DTMF signaling and outpulses the store telephone number to tandem switch 530. DLS 535, as above, also completes a communication path from the incoming trunk to the outgoing trunk, thereby removing the temporary hold from the call. Tandem switch 530 completes the call according to prior art practices. In this example, Tandem switch 530 seizes a trunk to local office 525-2 in response to the retrieved telephone number, and local office 525-2 completes the call to store 515. DLS 535 detects changes in answer supervision representing either call completion or abandonment and sends the information to database manager 540.

Turning now to FIG. 6, a diagram of the signaling sequence for a call connection for 950 on B is shown. Again, the top portion of the diagram illustrates the calling party to the database inquiry sequencing signals, and the bottom portion illustrates the database query to the store's sequence of signals. The user of the calling telephone station 510 removes the receiver from the switch hook, which causes an off-hook to be recognized at the originating local office of the network 520. The local office then returns a dial tone to the calling party and the calling party dials the 950-WXXX digits. The originating local office recognizes the 950 special code and seizes the trunk to the DLS 535. DLS 535 returns a wink signal to originating local office 525-1, which then sends up to 7-digits of the dialed 950 number. DLS 535 sends an acknowledgement off-hook signal to local office 525-1, and the local office sends the ANI. DLS 535 then sends the ANI to the database manager 540. Database manager 540 formats and sends a database inquiry to the local or remote database 545. Optionally, a brief audible "logo" or advertisement may be played to the calling party.

Database 545 returns the called number to database manager 540, which sends the called number to DLS 535. DLS 535 then seizes an outgoing trunk to tandem switch 530. Tandem switch 530 returns a wink, acknowledging seizure of the trunk. DLS 535 outpulses the called number on the trunk and splices the communications pass of the call, that is, begins transferring 8 bit time slots from the outgoing trunk to the incoming trunk, and vice versa, thus completing two ways of communication. Tandem switch 530 completes the call to terminating local office 525-2. Terminating local office 525-2 applies power ringing to the store telephone 515 and sends audible ringing towards the DLS, and because of the splice, to the calling party. Office 525-2 detects the called party off-hook and sends an answer supervision signal back towards the DLS 535. DLS 535 sends a message to database manager 540 reporting the call was answered by the called party, which the database manager records, along with the time the call was answered.

The connection continues until either the calling party of the called party hangs up. The on-hook state is detected by local office 515, and a disconnect message is sent to DLS 535. DLS 535 sends a message to database manager 540 reporting the end of the call, and database manager 540 records the ending time. The connection is torn down according to standard carrier practice.

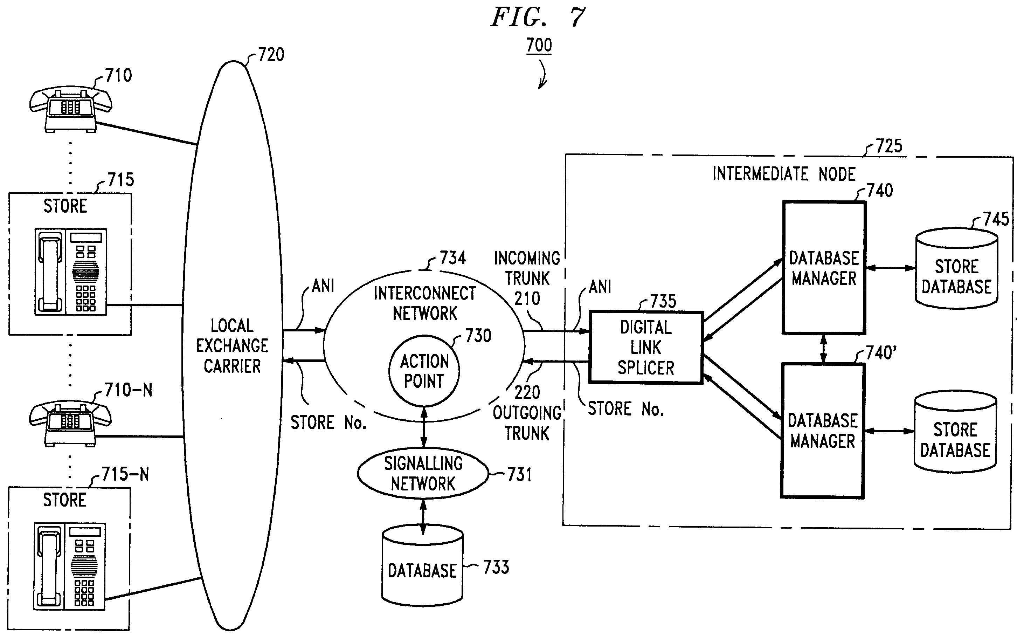

Turning now to FIG. 7, an embodiment of the present invention is shown that is usable in 800 and 900 long distance service. In this embodiment, the user of telephone 710 dials the telephone number 800-NNX-XXXX or 900-NXX-XXXX. The local exchange carrier network 720 receives the telephone number, determines the long distance service provider that serves this number, and routes the call to the long distance service provider's switch. Local exchange carrier network 720 seizes a trunk to action point (ACP) 730, and outpulses the 800-NNX-XXXX number or 900-NXX-XXXX number to ACP 730, along with the ANI of calling telephone 710.

ACP 730 recognizes the 800 or 900 Service Access Code (SAC), and sends an inquiry through signaling network 731 to translation database 733. A search is performed in the database, and a SAC number to POTS number translation is performed, as is known in the art and described in Weber, U.S. Patent No. 4,191,860, which issued March 4, 1980 to At&T Bell Telephone Laboratories. The POTS number associated with the intermediate node 725 is transmitted back to the signaling network 731 to ACP 730, which in response routes the call through the long distance service provider's network 734 to an intermediate node 725 according to the translation of the POTS number. Network 734 seizes a trunk and forwards the ANI to the intermediate node 725 in accordance with AT&T document TR41459A.

Intermediate node 725 comprises a digital link splicer circuit 735 and database manager 740, as described above. The ANI is extracted from the CCITT standard Q.931 call setup message and sent to database manager 740. Database manager 740 sends a query to store database 745 using only the received ANI as the key. Store database 745 returns a telephone number of a store nearby to telephone 710. DLS 735 translates the store telephone number to DTMF or the corresponding elements in a Q.931 call set-up message signaling, and seizes an outgoing trunk to network 734. Network 734 completes the outbound call to the store 715 via local exchange carrier network 720, as known in the art.

## Claims

1. A method of routing a telephone call from a calling station connected to a communication network to a desired destination comprising routing said call via said network to an intermediate node, and retrieving a telephone number of said destination from said intermediate node,

characterized in that

said routing comprises routing to an intermediate node using a number dialed by said calling station; and

said retrieving comprises

said intermediate node being responsive solely to a receipt of the calling station number for deriving said number of said destination.

2. A method according to claim 1, wherein said intermediate node comprises a digital link splicer circuit and a database manager, said step of deriving said destination number comprises

said splicer circuit receiving the calling station telephone number from said network,

said splicer circuit passing said calling station telephone number to said database manager,

said database manager performing a search using said calling station telephone number as the key, and

said database manager returning said number of said destination to said splicer circuit.

3. A method according to claim 2 further comprising the steps of

after said splicer circuit receives said number of said destination from said database manager, said splicer circuit completing said call to said destination number.

4. A method according to claim 1 further including the step of

said intermediate node initiating a further call to said destination based on said derived number.

5. A method according to claim 1 further including the step of

playing an audio recording to said calling station from said intermediate node before said retrieving step.

6. An arrangement for routing a call from a calling station to a nearby destination via an intermediate node comprising

means responsive to a receipt of a calling station number for deriving a called station number of a nearby destination based solely on said calling station number from a database system, and

means operative in response to a derived number for controlling a routing of said call from said calling station via said circuit to said destination nearby said calling station.

7. An arrangement according to claim 6 further comprising

means for interfacing said arrangement to a telephone switching network.

8. An arrangement according to claim 6 wherein said means responsive to receipt of a calling station number comprises

a receiver for receiving a calling station number,

means for converting said received calling station number to computer-usable form,

means responsive to said converted number for communicating with said database.

9. An arrangement according to claim 6 wherein said means for controlling a routing of said call comprises

means responsive to said database for converting said derived number, and

means for initiating a telephone call based on said converted derived number.

10. An arrangement according to claim 9 further comprising

means for connecting said call through said intermediate node.

11. A method of routing a telephone call from a calling station connected to a communication switching network to a desired destination comprising the ordered steps of

placing a first call from said calling station,

routing said first call through said network to an intermediate node, said intermediate node comprising a database system, based on a number dialed from said calling station,

receiving the calling station telephone number from said network,

deriving a telephone number from said system based solely on the received calling station number,

in response to the derived number, initialing a second call to said desired destination, and

connecting said first and said second calls.

12. A method according to claim 11 wherein said intermediate node comprises a digital link splicer circuit and a database manager, wherein the step of deriving said telephone number comprises

said digital link splicer circuit converting said calling station telephone number to computer-usable form,

said database manager using said converted number to retrieve said telephone number, and

said database manager returning said telephone number to said digital link splicer circuit.

13. A method of routing a telephone call from a calling station connected to a communication network to a desired destination, said network including an intermediate node comprising the steps of

routing a first call from said calling station through said network to said circuit,

said circuit receiving the calling station telephone number from said network,

deriving from a database system the desired destination number based solely on the received calling station number,

initiating a second call to said desired destination through said network based on the derived destination number, and

thereafter interconnecting said first and second calls.

14. A method according to claim 13 further including to step of

storing information regarding the second calls in said database system.

15. A method of routing a telephone call from a calling station connected to a first local switching office to a desired destination connected to a second local switching office, comprising the ordered steps of

placing a first call from said calling station,

said first switching office routing said first call through to an access tandem switch,

said tandem switch routing said first call to an intermediate node selected using a number dialed by said calling station,

said intermediate node receiving the calling station telephone number from said network at a splicer circuit,

said splicer circuit communicating the calling station telephone number to a database system,

said database system retrieving a telephone number for said desired destination based solely on said calling station telephone number,

communicating the number to said circuit,

said circuit routing a second call through said tandem switch in response to receipt of said number, connecting said first and second calls and,

said tandem switch routing said second call through said second switching office to said desired destination.

16. A method of routing a telephone call from a calling station connected to a first local switching office to a desired destination connected to a second local switching office, comprising the ordered steps of

placing a first call from said calling station via said first switching office,

said first switching office routing said first call to an intermediate node selected using a number dialed by said calling station,

said intermediate node receiving the calling telephone station number from said network at a splicer circuit,

said splicer circuit communicating the calling station telephone number to a database system,

said database retrieving a telephone number for said desired destination based solely on said calling station telephone number,

said database communicating said retrieved number to said circuit,

said circuit initiating a second call then said second office in response to receipt of said retrieved number and connecting said first and second calls, and

said second office routing said second call to said desired destination.

*FIG. 1*

LOCAL EXCHANGE CARRIER 120

100

INTERMEDIATE NODE 125

EP 0 493 896 A2

FIG. 2

DATABASE MANAGERS

135

MF DETECTOR  250

COMMUNICATIONS INTERFACE

PRIMARY SERIAL PORT  260  270

BACKUP SERIAL PORT  280

SYSTEM INTERFACE  290

245

CONTROLLER  240

DS1 FACILITY INTERFACE  230

DIGITAL LINK SPLICER

24

24

INCOMING DS1 (DS1-1)  210

OUTGOING DS1 (DS1-2)  220

*FIG. 3*

*FIG. 4*

## FIG. 5

500

520 LOCAL EXCHANGE CARRIER

510

515 STORE

510-N

515-N STORE

525-1 LOCAL OFFICE

ANI

525-2 LOCAL OFFICE

530 TANDEM SWITCH

STORE No.
STORE No.

LOCAL OFFICE

ANI

525-N

525 INTERMEDIATE NODE

535 DIGITAL LINK SPLICER

540 DATABASE MANAGER

545 STORE DATABASE

540' DATABASE MANAGER

STORE DATABASE

EP 0 493 896 A2

FIG. 6

## FIG. 7

<u>700</u>

STORE No.

EP 0 493 896 A2